(19) **Europäisches Patentamt / European Patent Office / Office européen des brevets**

(11) **EP 3 220 387 B1**

(12) **FASCICULE DE BREVET EUROPEEN**

(45) Date de publication et mention
de la délivrance du brevet:
**06.03.2019 Bulletin 2019/10**

(51) Int Cl.:
**G10K 15/04** *(2006.01)*   **G01N 21/17** *(2006.01)*

(21) Numéro de dépôt: **16160329.5**

(22) Date de dépôt: **15.03.2016**

(54) **DISPOSITIF PHOTO-ACOUSTIQUE ET MÉTHODE DE FABRICATION D'UN DISPOSITIF PHOTO-ACOUSTIQUE**

FOTOAKUSTISCHE VORRICHTUNG UND HERSTELLUNGSMETHODE EINER FOTOAKUSTISCHEN VORRICHTUNG

PHOTOACOUSTIC DEVICE AND METHOD FOR MANUFACTURING A PHOTOACOUSTIC DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**20.09.2017 Bulletin 2017/38**

(73) Titulaire: **Haute Ecole Arc Ingénierie
2000 Neuchâtel (CH)**

(72) Inventeurs:
• **AELLEN, Thierry
2000 Neuchâtel (CH)**
• **KEPPNER, Herbert
2013 Colombier (CH)**
• **KISSLING, Jean-Michel
2300 La Chaux-de-Fonds (CH)**
• **UHL, Stefanie
2000 Neuchâtel (CH)**
• **GRAF, Benjamin
2000 Neuchâtel (CH)**
• **OGGIER, Loris
2830 Courrendlin (CH)**
• **BISOFFI, Fabrice
25140 Charquemont (FR)**

(74) Mandataire: **Gevers SA
Rue des Noyers 11
2000 Neuchâtel (CH)**

(56) Documents cités:
**US-A1- 2006 256 339     US-A1- 2016 047 781**

• **MIT O ZGU R U ET AL: "ZnO Devices and Applications: A Review of Current Status and Future Prospects", PROCEEDINGS OF THE IEEE, IEEE. NEW YORK, US, vol. 98, no. 7, 1 juillet 2010 (2010-07-01), pages 1255-1268, XP011471954, ISSN: 0018-9219, DOI: 10.1109/JPROC.2010.2044550**
• **TERASAKO ET AL: "Optical properties of ZnO films grown by atmospheric-pressure chemical vapor deposition using Zn and H"2O as source materials", THIN SOLID FILMS, ELSEVIER-SEQUOIA S.A. LAUSANNE, CH, vol. 516, no. 2-4, 17 novembre 2007 (2007-11-17), pages 159-164, XP022349507, ISSN: 0040-6090, DOI: 10.1016/J.TSF.2007.06.130**

EP 3 220 387 B1

## Description

## Domaine technique

La présente invention se rapporte au domaine des dispositifs photo-acoustiques. Elle concerne, plus particulièrement, un dispositif photo-acoustique comprenant une couche mince photo-acoustique et un procédé de fabrication d'un tel dispositif. Elle concerne également l'utilisation d'un tel dispositif photo-acoustique.

## Etat de la technique

La photo-acoustique, aussi appelée opto acoustique, concerne le phénomène de la génération d'ondes mécaniques dans un objet illuminé par une radiation électromagnétique. Le phénomène de la photo-acoustique et ses applications diverses sont décrits dans un grand nombre de publications et de brevets, par exemple :

- Gusev V.E , Karabutov A.A, Laser Optoacoustics, American Institute of Physics 1992
- Beard P., Biomedical photoacoustics imaging, Interface Focus 1, pp. 602-603, 2011.
- Sá G.F, Serpa C, Arnaut L.G., Journal of Controlled Release, 167(3), pp. 290-300, 2013.
- US 20150131408
- US 20010055435 A1
- US 7762136 B2

Un exemple particulier d'un système photo-acoustique pour observer et analyser des caractéristiques d'effets non radiatives de matériaux à faible et moyenne largeur de bande énergétiques est décrit dans le document US 2006/256339A1.

Dans ce document est décrit comment un échantillon à analyser, par effet photo-acoustique, est irradié par de la lumière ainsi que les techniques de détection et traitement des signaux acoustiques.

Il est à noter que le document US 2006/256339A1 ne décrit que l'aspect d'analyse d'un échantillon par effet photo-acoustique mais pas comment exploiter cet effet pour un but que seul l'analyse d'un échantillon.

Il est à noter que, pour que l'effet photo-acoustique soit applicable dans la pratique, l'intensité de la source émettrice de la radiation électromagnétique, par exemple une source de lumière cohérente, doit varier dans le temps. Principalement deux modes d'émission de l'onde électromagnétique sont utilisés : l'impulsion ou la modulation de l'intensité. Le plus souvent on choisit le mode impulsionnel qui donne un meilleur rapport signal sur bruit.

Les systèmes composés de transducteurs photo-acoustiques solides développés à ce jour présentent une limitation en termes d'efficacité de l'effet vibratoire généré. Les générations d'ultrasons par stimulation optique sont basées sur des effets thermo élastiques, c'est-à-dire que le son est issu de la dilatation d'un matériau absorbant la lumière dû à la conversion de l'énergie lumineuse de lasers pulsés en chaleur dans ce matériau. Dans un premier temps, les transducteurs étudiés étaient basés sur l'expansion thermo élastique de films métalliques. Des couches de graphite ont aussi été utilisées pour la génération thermo élastique d'ondes acoustiques. De plus grands coefficients d'expansion ont été démontrés dans des films d'élastomère (PDMS) dans lesquels d'autres matériaux absorbants sont incorporés, comme par exemple du carbone noir, des nanotubes de carbone, de l'oxyde de graphène réduit, ou des couches d'or nanostructurées. De plus, afin d'augmenter l'absorption, certains transducteurs sont conçus de manière à piéger géométriquement la totalité de la lumière par réflexion interne totale grâce à la réalisation de cristaux photoniques.

Néanmoins, afin de produire des effets acoustiques importants, des sources lumineuses intenses doivent être mises en oeuvre ainsi que des moyens de détection sophistiqués. Les applications possibles dans le domaine de la métrologie à distance, les sonars, les actuateurs, les capteurs, et l'imagerie photo-acoustique par exemple restent donc limitées. La miniaturisation des dispositifs et des systèmes nécessaires reste difficile à réaliser. De plus, la fatigue du transducteur due à l'utilisation de polymère et les sources de lumière intense limite les performances dans le temps.

Bien que la possibilité de générer des déplacements et des vibrations par une illumination basée avant tout sur des effets thermiques présente de nombreux avantages, l'efficacité de conversion reste très faible comparée à celle obtenue par une tension électrique dans les matériaux piézoélectriques. D'une manière similaire, l'efficacité de la conversion d'une énergie mécanique de vibration en une énergie lumineuse (phototrononique) est faible et le nombre d'applications pratiques reste donc limité.

Certains matériaux ont été considérés les dernières années afin d'augmenter l'efficacité de l'effet photoacoustique. Par exemple il a été démontré que le ZnO déposé en couche mince est un matériau prometteur. Ses propriétés pour un nombre d'application, notamment celle de l'effet photoacoustique sont résumées dans : MIT O ZGRU et al, « ZnO Devices and Applications :Areview of Current status and Future Prospects », Proceedings IEEE, US, vol.98, nr.7, juillet 2010, pages 1255-1268. Cet article explique l'utilisation du ZnO en couche mince pour réaliser des système d'onde acoustiques de surface et mentionne que les coefficients de couplage électromagnétiques peuvent être importants. Par contre le résumé cité ne mentionne pas comment réaliser des couches ZnO ayant une structure de couche spécifique et qui présenteraient des effets photoacoustiques très importants voire suprenents.

Un but de l'invention est par conséquent de fournir un dispositif de conversion photo-acoustique dont l'efficacité est considérablememt augmentée, permettant l'utilisation de diodes électroluminescentes ou de laser moins puissants pour étendre le champ d'application avec des systèmes photo-acoustiques moins encombrants, plus simples et moins onéreux. Un autre but de l'invention est de réduire l'énergie thermique dissipée dans un dispositif de conversion photo-acoustique et par conséquent de minimiser la consommation énergétique et le coût de mise en oeuvre de ce dernier.

**Divulgation de l'invention**

A cet effet, et conformément à un premier aspect de la présente invention, il est proposé un dispositif photo-acoustique qui a pour but de remédier aux inconvénients des dispositifs photo-acoustiques de l'art antérieur.

En particulier, l'invention vise à augmenter l'efficacité de la conversion d'énergie électromagnétique en énergie mécanique d'un dispositif photo-acoustique, sans qu'il soit nécessaire d'utiliser des sources de lumières sophistiquées, puissantes et donc difficilement à mettre en oeuvre et qui sont de ce fait chers et encombrants. L'invention vise en outre à tirer parti des avantages d'une excitation lumineuse comparée aux dispositifs piézoélectriques traditionnels, comme par exemple l'insensibilité de la source lumineuse, donc de l'excitation, aux perturbations électromagnétiques.

Ce but est atteint par un dispositif photo-acoustique selon la revendication 1.

Selon un mode de réalisation le matériau MM' peut avoir une énergie de bande interdite électronique est comprise entre 2.0 eV et 7.0 eV.

Selon un autre mode de réalisation le matériau MM' peut avoir une énergie de bande interdite électronique est comprise entre 3.0 eV et 3.5 eV.

Selon un mode de réalisation la longueur d'onde d'émission de la source de lumière est comprise entre 355nm et 415nm.

Selon un mode de réalisation préféré le matériau MM' est du est du $Zn_xO$, dans lequel x est compris entre 0.5 et 0.7, de préférence compris entre 0.5 et 0.6, de préférence encore compris entre 0.5 et 0.55.

Alternativement, le matériau MM' peut également être constitué d' $Al_xN$, ou de $Ga_xN$ dans lequel x est compris entre 0.5 et 0.6.

Selon un mode de réalisation, le substrat est constitué de verre.

Selon un mode de réalisation, le substrat est constitué de silicium. On entend ici par structures colonnaires des nanostructures en formes de colonnes ou de piliers s'étendant dans une direction sensiblement parallèle à l'épaisseur de la couche depuis la surface du substrat sur laquelle ladite couche mince est déposée.

Selon un mode de réalisation particulier les dites nanostructures ont une orientation cristallographique préférée <002> dites aussi d'orientation selon un axe-c défini perpendiculairement au plan de la couche mince.

L'invention concerne également un système photo-acoustique comprenant :

- le dispositif photo-acoustique tel que décrit ci-dessus;
- un détecteur acoustique adapté à détecter l'onde acoustique généré par le dit dispositif photo-acoustique ;
- un dispositif de traitement de la dite onde acoustique.

Un autre objet de la présente invention concerne en outre un procédé de fabrication d'un dispositif photo-acoustique selon la revendication 12.

Selon un mode particulier du procédé de fabrication ledit matériau MM' est du $Zn_xO$, dans lequel x est compris entre 0.5 et 0.7, de préférence est compris entre 0.5 et 0.6, de préférence encore compris entre 0.5 et 0.55.

Alternativement, le matériau MM' est du $Al_xN$ ou du $Ga_xN$, dans lequel x est compris entre 0.5 et 0.6.

Selon une forme privilégiée de mise en oeuvre du procédé de l'invention, le substrat peut être de verre ou de silicium.

De préférence lors de l'étape de réalisation de l'organe de conversion photo-acoustique on positionne ledit substrat dans une enceinte à vide dont la pression résiduelle est inférieure à $1 \times 10^{-6}$ mbar.

De préférence encore lors de cette étape de réalisation de l'organe de conversion photo-acoustique on dépose ladite couche mince par pulvérisation cathodique d'une cible constituée d'un substrat fritté ayant une pureté de 10 ppm (parties par million) à l'aide d'un faisceau de gaz (ionisé) comprenant au moins de l' argon (Ar) et le matériau M'.

De façon avantageuse, la composition de la couche mince déposée est choisie comme étant la même composition MM' que le matériau de la dite cible constituée du substrat fritté. De plus, lors de la pulvérisation cathodique on veille de préférence à contrôler l'afflux d'argon et du matériau M' afin d'assurer la stoechiométrie et la structure cristalline colonnaire de la dite couche mince.

De façon avantageuse encore, on peut mesurer pendant le dépôt et la croissance de la dite couche mince l'effet photo-acoustique de cette couche mince. Ceci peut être réalisé par exemple en illuminant la couche mince par une source de lumière pulsé et sa vibration mécanique sera transmise par un gaz porteur (Ar, $N_2$, He) vers un microphone qui se trouve installé dans le système de dépôt. La méthode est connue comme spectroscopie photo-acoustique.

L'invention concerne également l'utilisation d'un dispositif photo-acoustique comprenant les étapes suivantes :

- enclencher la dite source de lumière et moduler l'amplitude du faisceau de lumière émis par ladite source de lumière avec une fréquence prédéterminée ;

- diriger le dit faisceau de lumière sur la dite couche mince ;
- détecter l'onde sonore produite par la dite couche mince.

## Brève description des dessins

L'invention sera mieux comprise à la lecture de la description qui suit, faite en référence aux figures 1 à 11 annexées :

- la figure 1 représente un dispositif photo-acoustique comprenant un substrat et une couche mince photo-acoustique ;
- la figure 2 illustre une coupe transversale d'une couche mince photo-acoustique illustrant des nanostructures colonnaires ;
- la figure 3 montre une micrographie d'une couche photo-acoustique ;
- la figure 4 montre un système photo-acoustique comprenant une source de lumière, un dispositif photo-acoustique et un détecteur acoustique ;
- la figure 5 montre un dispositif photo-acoustique comprenant une fibre optique avec une extrémité comprenant un revêtement photo-acoustique ;
- la figure 6 montre un dispositif photo-acoustique comprenant un substrat comprenant une pluralité de revêtements photo-acoustiques
- la figure 7 montre un substrat piézoélectrique comprenant à sa surface une couche photo-acoustique.

## Modes de réalisation de l'invention

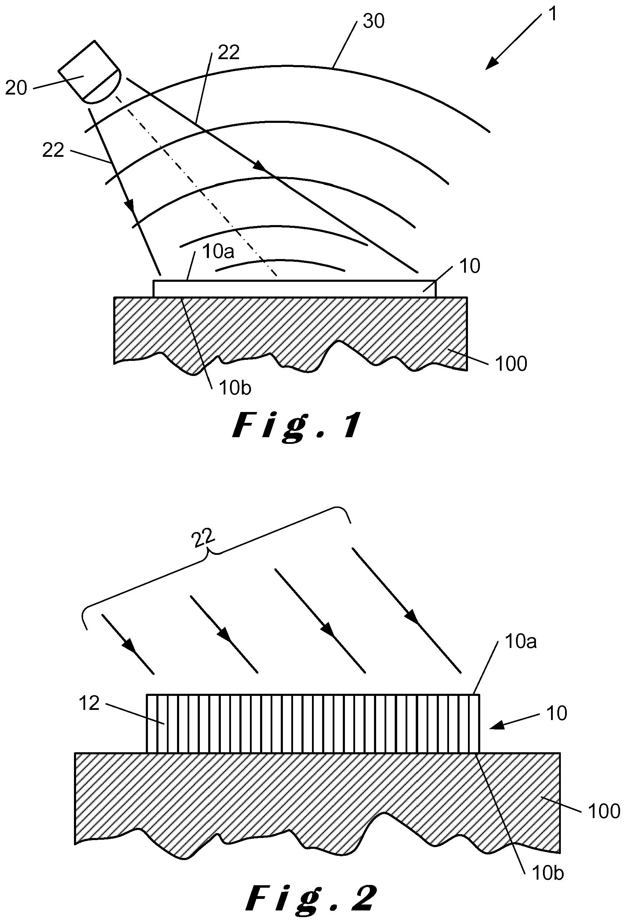

En référence à la figure 1 et la figure 2 un dispositif photo-acoustique de l'invention 1 est illustré comprenant:

- un organe de conversion photo-acoustique 2 comportant un substrat 100 recouvert, sur au moins une surface, d'une couche mince 10 constituée d'un matériau semi-conducteur de type MM', dans lequel M est un élément choisi parmi un des éléments du groupe Zinc (Zn), Cadmium (Cd), , Magnésium (Mg), Aluminium (Al), Gallium (Ga), Indium (In), et M' est un élément choisi parmi un des éléments du groupe Oxygène (O), Nitrogène (N), le dit matériau MM' présentant une énergie de la bande interdite électronique comprise entre 0.5 eV et 8.0 eV, ladite couche mince présentant une structure cristallographique de type Wurtzite et comprenant des nanostructures, et

- une source de lumière 20 apte à émettre, en opération, un faisceau de lumière 22 de longueur d'onde comprise entre 150 nm et 2.5 $\mu$m sur la couche mince 10 du milieu de conversion photo-acoustique.

La couche mince 10 comprend une première surface 10a faisant face au faisceau de lumière incident 22 et comprend une deuxième surface 10b opposée à la première surface 10a et au contact du substrat 100, lequel est de préférence constitué de verre. D'une manière générale une partie 22a du faisceau est incidente sur au moins une portion 10c de la couche mince 10. Le matériau MM' est choisi de sorte que ce dernier présente une énergie de bande interdite électronique comprise entre 0.5 eV et 8.0 eV, et de préférence comprise entre 2.0 eV et 7.0 eV. A cet effet, le matériau MM' est constitué dans un mode de réalisation préféré d'oxyde de zinc $Zn_xO$, dans lequel x est compris entre 0.5 et 0.8 de préférence compris entre 0.5 et 0.6 et de préférence compris entre 0.5 et 0.55.

Un matériau alternatif à l'oxyde de zinc peut également être choisi pour la couche mince, et notamment du nitrure d'aluminium $Al_xN$, ou encore du nitrure de Gallium $Ga_xN$ dans lequel x est compris entre 0.5 et 0.6.

Selon l'invention, la couche mince 10 de l'organe de conversion comporte des nanostructures 12. Ces nanostructures 12 sont des structures essentiellement colonnaires, c'est-à-dire en forme de colonnes ou de piliers, qui s'étendent longitudinalement suivant une direction sensiblement parallèle à l'épaisseur de la couche mince depuis le substrat, et donc une direction perpendiculaire au plan de la surface du dit substrat sur laquelle la couche mince est déposée.

De plus, ces nanostructures ont préférablement une orientation cristallographique majoritairement <002> perpendiculaire au substrat ou selon l'axe-c.

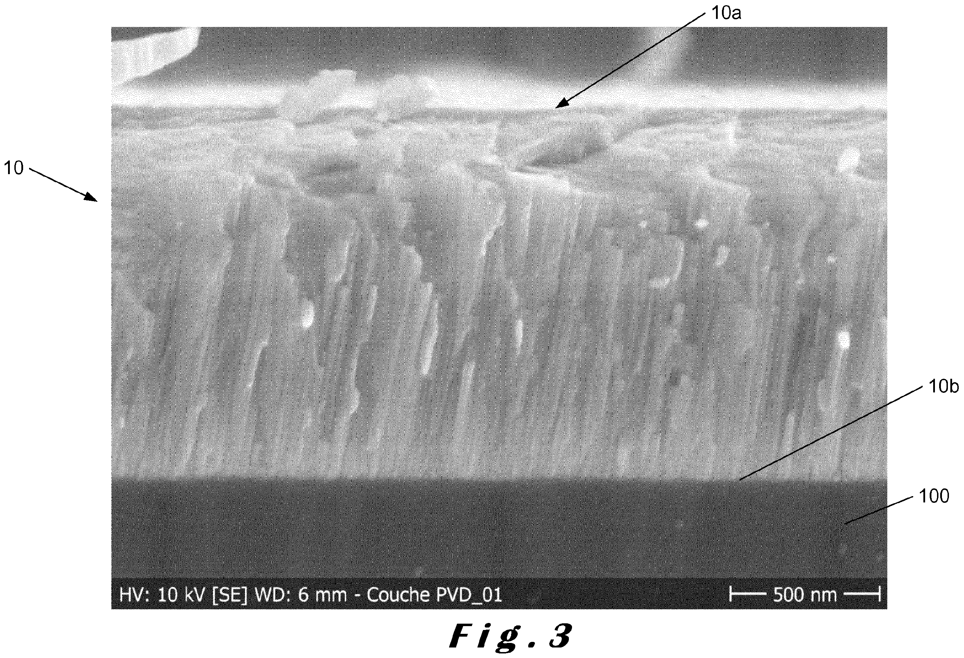

Selon la micrographie d'une couche (ZnO) de la figure 3, les colonnes de nanostructures ont des diamètres compris entre 1 nm et 200 nm. Dans un mode de réalisation particulière, le diamètre des nanostructures est entre 10 nm et 100 nm. Dans un mode de réalisation encore plus particulier, le diamètre des structures est entre 30nm et 60 nm. Les longueurs des nanostructures, définis perpendiculaires au plan de la couche mince est entre 10 nm et 10 microns, plus préférablement entre 100 nm et 1 micron.

Dans une configuration particulière, la structure a une orientation cristallographique majoritairement (002) et présente également une faible orientation (103) qui peut être un effet de surface. Cette mesure a été effectuée sur une couche (ZnO) déposée sur un substrat de silicium (100). Il est également compris que la variation du matériau M dans le composé MM' permet de varier l'énergie de gap des semi-conducteurs utilisable pour la couche mince et d'ainsi couvrir toutes les longueurs d'ondes pouvant être utilisées pour l'effet photo-acoustique dont les extrêmes correspondent à ceux caractéristique pour les matériaux AIN et InN. La bande interdite du GaN est intermédiaire à celui de AIN et InN. Il en est de même pour le système composé d'oxygène ou les extrêmes correspondent à ceux caractéristique pour les matériaux MgO et CdO. La bande interdite du ZnO est intermédiaire à celui de MgO et CdO.

En effet, c'est en changeant la concentration des matériaux que l'on peut changer les paramètres de maille de la structure et donc de la bande interdite.

On réfère à cela la référence suivante: http://www.memoireonline.com/04/12/5608/m_Contribution--l-etude-structurale-et-microstructurale-de-films-ZnO-obtenus-par-ablation-laser4.html.

La source de lumière peut quant à elle être choisie de sorte que la longueur d'onde du faisceau de lumière émis soit comprise entre 355 nm et 415 nm, c'est-à-dire plus spécifiquement adaptée à la couche de ZnO et de GaN, faisant partie des semi-conducteurs largement utilisés dans l'optoélectronique. La source de lumière 20 est préférablement une diode électroluminescente (DEL) mais peut également être un laser ou une source de lumière visible combinée avec un filtre optique.

De façon générale, la source de lumière utilisée dans le dispositif photo-acoustique 1 de l'invention est une source modulable dont l'intensité peut être variée électroniquement et/ou par combinaison avec un obturateur mécanique ou tout autre type d'obturateur.

L'organe de conversion photo-acoustique du dispositif 1 selon l'invention permet d'obtenir une efficacité ε élevée surprenante de conversion photo-acoustique. L'efficacité ε de la conversion photo-acoustique est défini comme le rapport entre l'énergie E2 de l'onde acoustique émise par ladite portion 10c et l'énergie E1 de l'onde lumineuse 22a incident sur cette dite portion 10c :

$$\varepsilon = E2/E1.$$

En particulier l'organe de conversion photo-acoustique 2 est doté d'un matériau MM' de type $Zn_xO$ permet d'obtenir des efficacités ε de conversion photo-acoustique très élevées, de l'ordre de 0.0007 par exemple.

Dans la pratique l'onde lumineuse 22 est modulée en intensité et l'onde acoustique 30 est également modulée en intensité. Afin de réaliser une modulation d'intensité de la lumière, différentes techniques peuvent être utilisées comme l'utilisation d'une source de lumière pulsée électriquement ou une source de lumière devant laquelle un obturateur variable est positionné. Le faisceau de lumière 22 peut être formé d'une pluralité de faisceaux de lumières provenant de la même source de lumière 20 ou d'une pluralité de sources de lumières. De plus, le faisceau de lumière 22 peut être un faisceau de lumière divergent, convergent ou substantiellement parallèle. Il est également admis que dans le cas de l'utilisation d'une pluralité de sources de lumières, ces sources de lumière peuvent avoir des longueurs d'onde différentes et /ou des moyen de modulation d'intensités différents. Il est compris que lorsque plusieurs faisceaux de lumière illuminent la dite couche mince, leurs longueurs d'onde sont choisis dans une bande de longueur d'onde permettent de produire l'effet photo-acoustique.

D'une manière pratique la dite efficacité ε sera préférablement exprimée comme le rapport entre la puissance P2 de l'onde acoustique 30 modulée émise par ladite portion 10c et la puissance P1 de l'onde lumineuse 22a modulée, incidente sur cette dite portion 10c :

$$\varepsilon = E2/E1= P2/P1$$

L'efficacité dans le cas de transducteurs photo-acoustiques de l'art antérieur basés sur des élastomères est typiquement entre $1x10^{-6}$ et $1x10^{-5}$, et une valeur typique obtenue est de $3x10^{-6}$. Le dispositif photo-acoustique de l'invention permet d'obtenir des valeurs plus élevées.

Ainsi, par exemple lors de l'excitation d'une couche mince ZnO d'une épaisseur de 1 micron sur un substrat de verre de 2 pouces et une épaisseur de 100 microns par une source lumineuse comprenant une diode électroluminescente (DEL) modulée en intensité et à une fréquence correspondant aux modes de résonnances dudit substrat de verre avec la couche mince dans le domaine des fréquences audibles par l'oreille humaine (4.3, 6.3, 11.4 kHz par exemple) et ayant une puissance optique de 200 mW on obtient un signal acoustique audible par l'oreille humaine, ce qui n'est pas possible avec des dispositifs photo-acoustiques connus.

En particulier, un dispositif comprenant une couche mince ZnO de l'invention permet d'obtenir des valeurs de déplacement de 1 nm, dans la direction perpendiculaire au plan de la couche mince, en illuminant la dite couche mince de 1μm d'épaisseur avec une DEL de 2.5 mW.

L'efficacité peut également être modifiée suivant les configurations en ajustant l'angle du faisceau incident sur la surface de la couche mince de l'organe de conversion 2 ainsi que la focalisation du faisceau lumineux. Comme l'angle incident du faisceau définit la profondeur de la couche mince traversée par la lumière incidente et donc l'intensité de lumière absorbée qui est proportionnelle à l'effet photo-acoustique généré, la puissance de la source de lumière peut être réduite afin d'obtenir le même effet photo-acoustique en illuminant la couche mince par un faisceau incident non perpendiculaire à la dite couche mince. Il également possible d'augmenter l'intensité de la lumière absorbée en gardant l'intensité moyenne de la source constante en utilisant une couche anti réflective sur la couche photo-acoustique pour augmenter l'intensité de lumière absorbée ou des couches réflectives pour confiner la lumière dans la couche mince photo-acoustique en augmentant le trajet parcouru par la lumière par ce biais.

Il convient par ailleurs de noter que ledit dispositif photo-acoustique 1 de la présente invention est fonctionnel lorsqu'il est placé dans tout milieu dans lequel une onde acoustique peut se propager, tel qu'un liquide ou un gaz, notamment de l'eau, respectivement de l'air.

Les différents possibles milieux de propagation ainsi que les différents types de modes de propagation d'une onde sonore ou acoustique dans un milieu sont connus par l'homme de métier et ne seront pas décrits plus en détail ici.

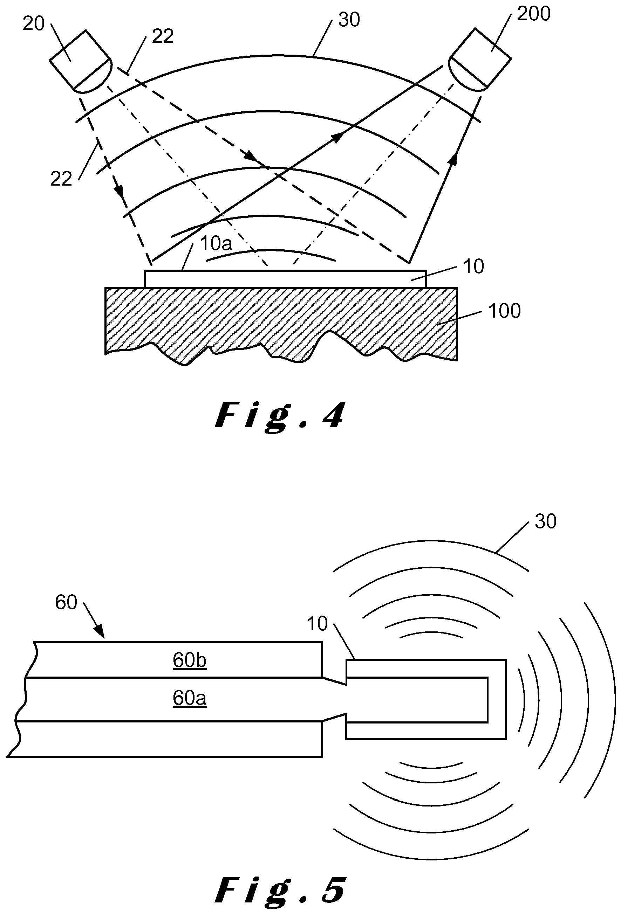

Le dispositif de conversion photo-acoustique 1 de l'invention peut avantageusement être mis en oeuvre dans un système photo-acoustique 4, illustré dans la figure 4, comprenant :

- ledit dispositif photo-acoustique 1 ;

- un détecteur 200 acoustique adapté à détecter l'onde acoustique 30 généré par le dit dispositif photo-acoustique 1 ;

- un système de traitement de la dite onde acoustique 30.

En guise du détecteur 200 on peut notamment utiliser un microphone et le système de traitement peut comporter par exemple un ordinateur ou tout système d'analyse et de calcul numérique communément utilisé pour l'analyse d'ondes acoustiques.

Avantageusement le système de l'invention peut être utilisé dans diverses applications.

Dans un exemple, en référence à la figure 5, l'extrémité d'une fibre optique 60, comprenant un coeur 60a et un cladding 60b, est revêtue par une couche préférablement faite de ZnO. De préférence la couche optique 10 est déposée sur une extrémité du coeur de la fibre 60a comme illustré dans la figure 5. La lumière guidé par la fibre optique 60 génère, par l'effet de conversion photo-acoustique dans la dite couche ZnO une onde acoustique, ce qui permet par exemple de détecter des sténoses dans le système cardiovasculaire. Dans cette application le système photo-acoustique fonctionne comme un micro sonar.

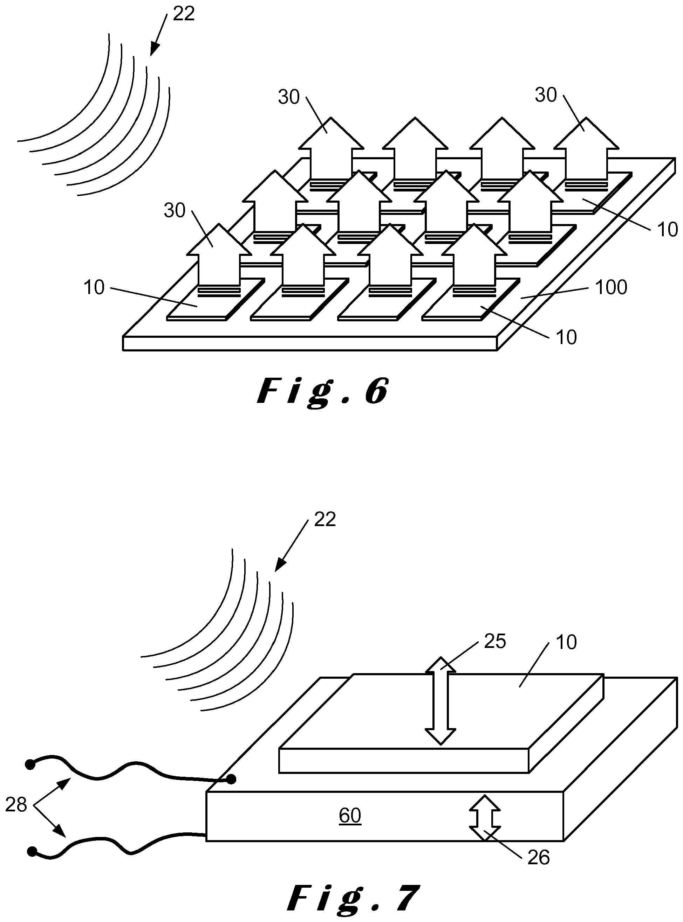

Dans une autre application, illustrée dans la figure 6, un réseau comprenant une pluralité de couches préférablement faites de ZnO peut être arrangée sur un substrat et la détection des signaux ultrasonores produit par les éléments dudit réseau permet de mesurer la topographie d'une surface solide ou liquide.

Dans une autre application, illustrée dans la figure 7, une couche piézo-électrique 10, préférablement faite en ZnO, peut être déposée sur un substrat 60 fait dans un matériau céramique et qui a des propriétés piézo-électriques. Dans une telle configuration une tension électrique peut être obtenu par le substrat, en illuminant la dite couche ZnO. En effet, l'illumination de la couche ZnO produit une vibration 25 qui est transmis au substrat piézo-électrique 60 et produit ainsi une dilatation 26 de ce substrat 60. La tension électrique ainsi générée par le substrat piézo-électrique 60 peut par exemple être mesurée à l'aide de contacts 28 avec le substrat 60 piézo-électrique. Préférablement un substrat fait dans du PZT (composite de Zirconate de Plomb et Titane) est utilisé pour une telle application.

Dans un autre exemple d'application, le dispositif photo-acoustique de l'invention peut être utilisé pour générer, par l'envoi d'un faisceau lumineux, de l'énergie mécanique ou électrique dans des systèmes MEMS (Micro electro mechanical systems). L'objet MEMS est pour cela adapté et mis en contact avec le dispositif photo-acoustique et est préférablement composé de silicium, ce matériau étant majoritairement présent dans les systèmes micro structurés due au développement technologique issu de l'électronique.

La fabrication du dispositif de conversion photo-acoustique 1 de l'invention implique la réalisation d'un organe de conversion photo-acoustique 2 par dépôt sur un substrat, sur au moins une surface, d'une couche mince constituée d'un matériau semi-conducteur de type MM', dans lequel M est un élément choisi parmi un des éléments du groupe Zinc (Zn), Cadmium (Cd), Magnésium (Mg), Aluminium (Al), Gallium (Ga), Indium (In), et M' est un élément choisi parmi un des éléments du groupe Oxygène (O), Nitrogène (N), le dit matériau MM' présentant une énergie de bande interdite électronique comprise entre 0.5 eV et 8.0 eV, ladite couche mince présentant une structure cristallographique de type Wurtzite et comprenant des nanostructures.

De préférence ledit matériau MM' est du $Zn_xO$, dans lequel x est compris entre 0.5 et 0.7, de préférence compris entre 0.5 et 0.6, de préférence encore compris entre 0.5 et 0.55.

Plus particulièrement, le substrat de réalisation de l'organe de conversion photo-acoustique 2 est préférentiellement un substrat de verre ou du silicium. Ce substrat est ensuite positionné dans une enceinte à vide dont la pression résiduelle est inférieure à $1 \times 10^{-6}$ mbar puis on forme la une couche mince de composition MM' par pulvérisation cathodique d'une cible constituée d'un substrat fritté ayant une pureté de 10 ppm (parties par million) sur une surface dudit objet pouvant être un substrat à l'aide d'un faisceau de gaz (ionisé) comprenant au moins de l'argon (Ar) et un gaz de la composition M'.

Lors de cette étape de pulvérisation cathodique on veille de préférence à contrôler l'afflux d'argon et du gaz M' afin de contrôler la stoechiométrie et la structure cristalline colonnaire de la couche mince, par exemple au moyen de débitmètres.

Pendant le dépôt de la couche mince, le substrat peut être à température ambiante ou élevé à une température qui peut aller jusqu'à 500°C et la pression dans l'enceinte peut être comprise entre $10^{-4}$ mbar et la pression atmosphérique, préférablement entre $10^{-3}$ et $10^{-2}$ mbar.

De même, la puissance RF utilisée peut être comprise entre 10 à 5000 W, préférablement de 100 à 500 W.

On peut également lors de la réalisation de la couche mince de l'organe de conversion photo-acoustique 2 mesurer l'effet photo-acoustique de la dite couche mince. Pour se faire, par exemple une illumination UV est opérée pendant le dépôt sur l'élément vibrant qui est mesuré par un détecteur acoustique adapté à détecter l'onde acoustique.

## Exemples

L'exemple de réalisation dont une microphotographie est montrée dans la figure 3 comprend les structures suivantes :

- un substrat de 50mm de diamètre constitué d'un verre de 100 $\mu$m d'épaisseur;

- une couche 10 de ZnO d'épaisseur de 1 $\mu$m, la couche ayant la surface du substrat de 2 pouces;

- les colonnes 12 cristallines de la couche 10 ont un diamètre variant de 30 nm à 60 nm;

La couche ZnO montré en Fig. 3 a été réalisée avec un procédé de fabrication basé sur la pulvérisation cathodique et comprend les étapes suivantes:

- Présenter un substrat de ZnO stoechiométrique de pureté 5N utilisé comme cible cathodique et une plaque de verre séparé de 5 cm sont dans une enceinte à une pression de 2.0x10-6 mbar ;

- délivrer un débit d'argon et de O$_2$ à un rapport de 2:1, et d'une pureté de 5.0 sont introduit dans l'enceinte et une pression de 7.5x10-3 Pa réglée à l'aide d'une vanne d'étranglement y est établit ;

- appliquer une puissance du générateur RF de 100W utilisé à une fréquence de 13.56 MHz afin de permettre la déposition de la couche mince.

Comme source de lumière une LED UV a été utilisé ayant une longueur d'onde de 365nm et une puissance de 200 mW (type Seoul Semiconductors P8D137). En modulant la source à une fréquence de de 1 à 12 kHz sur un substrat de verre de 2 pouces et 100 $\mu$m d'épaisseur pourvue d'une couche de 1 $\mu$m de ZnO on obtient une onde acoustique qui varie en fonction des modes de vibration du système de manière audible.

Comme source de lumière une LED UV a été utilisé ayant une longueur d'onde de 365nm et une puissance de 2.5mW (type Seoul Semiconductors T5F36). En modulant la source à une fréquence de 11.4 kHz sur un substrat de verre de 2 pouces et 100 micron d'épaisseur pourvue d'une couche de 1 micron de ZnO on obtient une onde acoustique pourvue d'harmoniques à une fréquence fondamentale de 11.4 kHz.

Comme source de lumière une LED UV a été utilisé ayant les longueurs d'onde de 385nm et 405nm et une puissance de 200 mW (type Lumex SSL-LXTO46UV1C et SSL-LXTO46UV2C, respectivement). En modulant la source à une fréquence de 11.4 kHz sur un substrat de verre de 2 pouces et 100 micron d'épaisseur pourvue d'une couche de 1 $\mu$m de ZnO on obtient une onde acoustique pourvue d'harmoniques à une fréquence fondamentale de 11.4 kHz.

Il a été en outre démontré expérimentalement qu'un changement de 0.3 nm de l'épaisseur d'une couche ZnO de 400nm déposé sur un substrat de verre peut être obtenu en illuminant cette couche avec une LED ayant une longueur d'onde de 365nm et une puissance de 2.5mW. Avec une épaisseur de la couche ZnO de 1000nm un changement de 1 nm de son épaisseur a été obtenu.

L'efficacité de l'effet photo-acoustique obtenu dans ces conditions d'illumination est de 0.0007. En optimisant les paramètres du procédé de fabrication, en particulier en optimisant la stoechiométrie et la cristallinité de la couche ZnO à l'aide du rapport entre l'argon et l'O$_2$ ou à l'aide de recuits, ou en augmentant le confinement optique cette efficacité pourrait être améliorée d'un facteur de 10 au moins.

Il a été démontré expérimentalement que le signal acoustique augmente en fonction de l'épaisseur de la couche ZnO déposée.

Afin d'augmenter le signal acoustique, une source de lumière UV plus intense telle que des sources lasers ou des DEL peuvent être utilisée.

## Revendications

1. Dispositif photo-acoustique (1) comportant un organe de conversion photo-acoustique comportant un substrat (100) recouvert, sur au moins une surface, d'une couche mince (10), ledit dispositif comportant une source de lumière (20) apte à émettre un faisceau de lumière (22) sur la couche mince (10) du milieu de conversion photo-acoustique,

    - la dite couche mince (10) étant constituée d'un matériau semi-conducteur de type MM', dans lequel M est un élément choisi parmi un des éléments du groupe Zinc (Zn), Cadmium (Cd), Magnésium (Mg), Aluminium (Al), Gallium (Ga), Cadmium(Cd), Indium (In), et M' est un élément choisi parmi un des éléments du groupe Oxygène (O), Nitrogène (N), le matériau MM' présentant une énergie de bande interdite électronique comprise entre 0.5 eV et 8.0 eV, ladite couche mince présentant une structure cristallographique de type Wurtzite et comprenant des nanostructures (12), ledit faisceau de lumière (22) ayant une longueur d'onde comprise entre 150 nm et 2.5 $\mu$m,

    **caractérisé en ce que**
    les nanostructures (12) de la couche mince (10) sont des structures colonnaires dont les axes longitudinaux sont orientés perpendiculairement au plan de croissance de la couche mince.

2. Dispositif photo-acoustique (1) selon la revendication 1 **caractérisé en ce que** l'énergie de la bande interdite électronique est comprise entre 2.0 eV et 7.0 eV.

3. Dispositif photo-acoustique (1) selon la revendication 2 **caractérisé en ce que** l'énergie de la bande interdite électronique est comprise entre 3.0 eV et 3.5 eV.

4. Dispositif photo-acoustique (1) selon l'une quelconque des revendications 1 à 3, **caractérisé en ce que** la longueur d'onde d'émission de la source de lumière (20) est comprise entre 355nm et 415nm.

5. Dispositif photo-acoustique (1) selon l'une quelconque des revendications 1 à 4, caractérisé en que le matériau MM' est du $Zn_xO$, dans lequel x est compris entre 0.5 et 0.7, de préférence compris entre 0.5 et 0.6, de préférence encore compris entre 0.5 et 0.55.

6. Dispositif photo-acoustique (1) selon la revendication 1 ou 4 caractérisé en que le matériau MM' est du $Al_xN$, dans lequel x est compris entre 0.5 et 0.6.

7. Dispositif photo-acoustique (1) selon la revendication 1 ou 4 caractérisé en que le matériau MM' est du $Ga_xN$, dans lequel x est compris entre 0.5 et 0.6.

8. Dispositif photo-acoustique (1) selon l'une des revendications 1 à 7, caractérisé en que le substrat (100) est constitué de verre.

9. Dispositif photo-acoustique (1) selon l'une des revendications 1 à 8, caractérisé en que le substrat (100) est constitué de silicium.

10. Dispositif photo-acoustique (1) selon l'une des revendications 1 à 9, **caractérisé en ce que** le plan de la dite couche mince (10) est un plan cristallographique avec orientation <002>.

11. Système photo-acoustique comprenant :

    - le dispositif photo-acoustique (1) selon l'une des revendications 1 à 10 ;
    - un détecteur acoustique (200) adapté à détecter l'onde acoustique (30) généré par le dit dispositif photo-acoustique (1) ;
    - un système de traitement de la dite onde acoustique (30).

12. Procédé de fabrication d'un dispositif photo-acoustique (1) selon l'une des revendications 1 à 10, **ca-**

**ractérisé en ce qu'**il comprend les étapes successives suivantes :

    - réaliser un organe de conversion photo-acoustique par dépôt sur un substrat, sur au moins une surface, d'une couche mince (10) constituée d'un matériau semi-conducteur de type MM', dans lequel M est un élément choisi parmi un des éléments du groupe Zinc (Zn), Aluminium (Al), Gallium (Ga), Cadmium(Cd), Indium (In), et M' est un élément choisi parmi un des éléments du groupe Oxygène (O), Nitrogène (N), Soufre (S), Phosphore (P), le dit matériau MM' présentant une énergie de la bande interdite électronique comprise entre 0.5 eV et 8.0 eV, ladite couche mince (10) présentant une structure cristallographique de type wurtzite et comprenant des nanostructures sont des structures colonnaires dont les axes longitudinaux sont orientés perpendiculairement au plan de croissance de la couche mince, et
    - positionner une source de lumière (20) apte à émettre un faisceau (22) de lumière de longueur d'onde comprise entre 155nm et 2.5$\mu$m vis-à-vis dudit organe de conversion photo-acoustique de telle sorte qu'en opération ladite source (20) émette un faisceau lumineux en direction de la couche mince (10) de l'organe de conversion photo-acoustique.

13. Procédé de fabrication selon la revendication 12, **caractérisé en ce que** ledit matériau MM' est du $Zn_xO$, dans lequel x est compris entre 0.5 et 0.7, de préférence compris entre 0.5 et 0.6, de préférence encore compris entre 0.5 et 0.55.

14. Procédé de fabrication selon la revendication 12, caractérisé en que le matériau MM' est du $Al_xN$, dans lequel x est compris entre 0.5 et 0.6.

15. Procédé de fabrication selon la revendication 12, caractérisé en que le matériau MM' est du $Ga_xN$, ou x est compris entre 0.5 et 0.6.

16. Procédé de fabrication selon l'une des revendications 12 à 15, **caractérisé en ce que** la dite longueur d'onde est comprise entre 355nm et 415nm.

17. Procédé de fabrication selon l'une des revendications 12 à 16, dans lequel le substrat (100) est composé de verre ou de silicium;

18. Procédé de fabrication selon l'une des revendications 12 à 17, dans lequel on place le dit substrat (100) dans une enceinte à vide dont la pression résiduelle est plus faible que 1 x $10^{-6}$ mbar.

19. Procédé de fabrication selon l'une des revendications 12 à 18, dans lequel la dite couche mince (10) est déposée sur le substrat (100) par pulvérisation cathodique d'une cible constituée d'un substrat fritté de composition MM' dont la pureté est au moins 10ppm le dit substrat ayant une surface de dépôt destiné à être pulvérisée à l'aide d'un faisceau de gaz (ionisé) comprenant au moins de l'argon (Ar) et de la composition du matériau M'.

20. Utilisation d'un dispositif photo-acoustique (1) selon l'une quelconque des revendications 1 à 10, selon laquelle :

- On enclenche la dite source de lumière (20) et on module l' amplitude du faisceau de lumière (22) émis avec une fréquence prédéterminée ;
- On dirige le dit faisceau de lumière (22) sur la dite couche mince de l'organe de conversion photo-acoustique ;
- On détecte l'onde sonore (30) émise par la dite couche mince (10).

**Patentansprüche**

1. Fotoakustische Vorrichtung (1), welche ein fotoakustisches Umwandlungselement mit einem Substrat (100) umfasst, das auf mindestens einer Fläche mit einer dünnen Schicht (10) bedeckt ist, wobei besagte Vorrichtung eine Lichtquelle (20) zum Emittieren eines Lichtstrahls (22) auf die dünne Schicht (10) des fotoakustischen Umwandlungsmediums umfasst, wobei die dünne Schicht (10) aus einem Halbleitermaterial vom Typ MM' besteht, in welchem M ein Element ist, das aus einem der Elemente der Gruppe Zink (Z), Kadmium (Cd), Magnesium (Mg), Aluminium (Al), Gallium (Ga), Kadmium (Cd) und Indium (In) ausgewählt wird, und M' ein Element ist, das aus einem der Elemente der Gruppe Sauerstoff (O) und Nitrogen (N) ausgewählt wird, wobei das Material MM' eine elektronische Bandlückenenergie zwischen 0,5 eV und 8.0eV aufweist, wobei besagte dünne Schicht eine kristallografische Struktur, wie zum Beispiel eine Wurtzitkristallstruktur aufweist, und Nanostrukturen (12) umfasst, wobei besagter Lichtstrahl (22) eine Wellenlänge von 150nm und 2.5$\mu$m hat, **dadurch gekennzeichnet, dass** die Nanostrukturen (12) der dünnen Schicht (10) säulenförmige Strukturen sind, deren Längsachsen senkrecht zur Wachstumsebene der dünnen Schicht ausgerichtet sind.

2. Fotoakustische Vorrichtung (1) nach Anspruch 1, **dadurch gekennzeichnet, dass** die elektronische Bandlückenenergie zwischen 2.0eV und 7.0eV liegt.

3. Fotoakustische Vorrichtung (1) nach Anspruch 2, **dadurch gekennzeichnet, dass** die elektronische Bandlückenenergie zwischen 3.0eV und 3.5eV liegt.

4. Fotoakustische Vorrichtung (1) nach einem der Ansprüche 1 bis 3, **dadurch gekennzeichnet, dass** die Emissionswellenlänge der Lichtquelle (20) zwischen 355nm und 415nm liegt.

5. Fotoakustische Vorrichtung (1) nach einem der Ansprüche 1 bis 4, **dadurch gekennzeichnet, dass** das Material MM' $Zn_xO$ ist und X zwischen 0.5 und 0.7, vorzugsweise zwischen 0.5 und 0.6 und idealerweise zwischen 0.5 und 0.55 liegt.

6. Fotoakustische Vorrichtung (1) nach Anspruch 1 oder 4, **dadurch gekennzeichnet, dass** das Material MM' $Al_xN$ ist, in welchem X zwischen 0.5 und 0.6 liegt.

7. Fotoakustische Vorrichtung (1) nach Anspruch 1 oder 4, **dadurch gekennzeichnet, dass** das Material MM' $Ga_xN$ ist, in welchem X zwischen 0.5 und 0.6 liegt.

8. Fotoakustische Vorrichtung (1) nach einem der Ansprüche 1 bis 7, **dadurch gekennzeichnet, dass** das Substrat (100) aus Glas besteht.

9. Fotoakustische Vorrichtung (1) nach einem der Ansprüche 1 bis 8, **dadurch gekennzeichnet, dass** das Substrat (100) aus Silizium besteht.

10. Fotoakustische Vorrichtung (1) nach einem der Ansprüche 1 bis 9, **dadurch gekennzeichnet, dass** die Ebene der besagten dünnen Schicht (10) eine kristallografische Ebene mit Ausrichtung <002> ist.

11. Fotoakustisches System, welches folgendes umfasst:

- die fotoakustische Vorrichtung (1) nach einem der Ansprüche 1 bis 10;
- einen akustischen Detektor (200), der die durch besagte fotoakustische Vorrichtung (1) erzeugte akustische Welle (30) erfassen kann;
- ein System zur Verarbeitung der besagten akustischen Welle (30).

12. Verfahren zur Herstellung einer fotoakustischen Vorrichtung (1) nach einem der Ansprüche 1 bis 10, **dadurch gekennzeichnet, dass** es die nachstehenden, aufeinanderfolgenden Schritte umfasst:

- die Herstellung eines fotoakustischen Umwandlungselements durch Auftrag einer dünnen Schicht (10), bestehend aus einem Halbleitermaterial vom Typ MM', auf mindestens eine Fläche eines Substrats, wobei M ein Element ist, das ausgewählt wird aus einem der Elemente der Gruppe Zink (Zn), Aluminium (Al), Gallium (Ga), Kadmium (Cd) und Indium (In), und M' ein Element ist, das ausgewählt wird aus einem der Elemente der Gruppe Sauerstoff (O), Nitrogen (N), Schwefel (S) und Phosphor (P), wobei besagtes Material MM' eine elektronische Bandlückenenergie zwischen 0.5eV und 8.0eV aufweist, wobei besagte dünne Schicht (10) eine kristallgrafische Struktur, wie zum Beispiel eine Wurtzitkristallstruktur aufweist, und Nanostrukturen umfasst, die säulenförmige Strukturen sind, deren Längsachsen senkrecht zur Wachstumsebene der dünnen Schicht ausgerichtet sind,

- die Positionierung einer Lichtquelle (20), die in der Lage ist, einen Lichtstrahl (22) mit einer Wellenlänge von 155nm bis 2.5μm zu emittieren, gegenüber besagten fotoakustischen Umwandlungselements, sodass die besagte Lichtquelle (20) während des Vorgangs einen Lichtstrahl in Richtung der dünnen Schicht (10) des fotoakustischen Umwandlungsorgans emittiert.

13. Herstellungsverfahren nach Anspruch 12, **dadurch gekennzeichnet, dass** besagtes Material MM' $Zn_xO$ ist, in welchem X zwischen 0.5 und 0.7 liegt, vorzugsweise zwischen 0.5 und 0.6, idealerweise aber zwischen 0.5 und 0.55.

14. Herstellungsverfahren nach Anspruch 12, **dadurch gekennzeichnet, dass** das Material MM' $Al_xN$ ist, in welchem X zwischen 0.5 und 0.6 liegt.

15. Herstellungsverfahren nach Anspruch 12, **dadurch gekennzeichnet, dass** das Material MM' $Ga_xN$ ist, und X zwischen 0.5 und 0.6 liegt.

16. Herstellungsverfahren nach einem der Ansprüche 12 bis 15, **dadurch gekennzeichnet, dass** besagte Wellenlänge zwischen 355nm und 415nm liegt.

17. Herstellungsverfahren nach einem der Ansprüche 12 bis 16, in welchem das Substrat (100) aus Glas oder Silizium besteht;

18. Herstellungsverfahren nach einem der Ansprüche 12 bis 17, in welchem man besagtes Substrat (100) in einen Vakuumbehälter mit einem Restdruck kleiner 1 x 10⁻⁶ mbar stellt.

19. Herstellungsverfahren nach einem der Ansprüche 12 bis 18, in welchem besagte dünne Schicht (10) auf dem Substrat (100) durch Kathodenzerstäubung eines Targets aufgetragen wird, das aus einem gesinterten Substrat mit der Zusammensetzung MM' besteht, dessen Reinheit mindestens 10ppm aufweist, wobei besagtes Substrat eine Auftragsfläche hat, die mithilfe eines Gasstrahls (ionisiert), welcher mindestens Argon (Ar) enthält, und der Zusammensetzung des Materials M', zerstäubt wird.

20. Benutzung einer fotoakustischen Vorrichtung (1) nach einem der Ansprüche 1 bis 10, in der:

- man die besagte Lichtquelle (20) einschaltet und man die Amplitude des emittierten Lichtstrahls (22) mit einer bestimmten Frequenz moduliert;
- man besagten Lichtstrahl (22) auf besagte dünne Schicht des fotoakustischen Umwandlungselements richtet;
- man die von besagter dünnen Schicht (10) emittierte Schallquelle (30) erfasst.

## Claims

1. A photo-acoustic device (1) comprising a photo-acoustic conversion member comprising a substrate (100) coated, on at least one surface, with a thin layer (10), with said device comprising a light source (20) adapted to emit a light beam (22) onto the thin layer (10) of the photo-acoustic conversion medium,

- with said thin layer (10) being made of a semiconductor material of the MM' type, wherein M is one element selected from the elements of the Zinc, (Zn), Cadmium (Cd), Magnesium (Mg), Aluminum (Al), Gallium (Ga), Cadmium (Cd), Indium (In) group and M' is one element selected from the elements of the Oxygen (O), Nitrogen (N) group, with the material MM' having an energy of forbidden band ranging from 0.5eV to 8.0eV, with said thin layer having a crystallographic structure of the Wurtzite type and comprising nanostructures (12), with said light beam (22) having a wavelength ranging from 150nm to 2.5μm,

**characterized in that**:

- the nanostructures (12) of the thin layer (10) are columnar structures, the longitudinal axes of which are oriented perpendicularly to the thin layer growth plane.

2. A photo-acoustic device (1) according to claim 1, **characterized in that** the energy of the electronic forbidden band ranges from 2.0eV to 7.0eV.

3. A photo-acoustic device (1) according to claim 2, **characterized in that** the energy of the electronic forbidden band ranges from 3.0eV to 3.5eV.

4. A photo-acoustic device (1) according to any one of claims 1 to 3, **characterized in that** the light source emission wavelength (20) ranges from 355nm to 415nm.

5. A photo-acoustic device (1) according to any one of claims 1 to 4, **characterized in that** the material MM' is $Zn_xN$, wherein x ranges from 0.5 to 0.7, preferably ranges from 0.5 to 0.6, and more preferably ranges from 0.5 to 0.55.

6. A photo-acoustic device (1) according to claim 1 or 4, **characterized in that** the material MM' is $Al_xN$, wherein x ranges from 0.5 to 0.6.

7. A photo-acoustic device (1) according to claim 1 or 4, **characterized in that** the material MM' is $Ga_xN$, wherein x ranges from 0.5 to 0.6.

8. A photo-acoustic device (1) according to one of claims 1 to 7, **characterized in that** the substrate (100) is made of glass.

9. A photo-acoustic device (1) according to one of claims 1 to 8, **characterized in that** the substrate (100) is made of silicon.

10. A photo-acoustic device (1) according to one of claims 1 to 9, **characterized in that** the plane of said thin layer (10) is a crystallographic plane with a <002> orientation.

11. A photo-acoustic system comprising :

    - the photo-acoustic device (1) according to one of claims 1 to 10;
    - one acoustic detector (200) adapted to detect the acoustic wave (30) generated by said photo-acoustic device (1);
    - a system for processing said acoustic wave (30).

12. A method for manufacturing a photo-acoustic device (1) according to one of claims 1 to 10, **characterized in that** it comprises the following successive steps:

    - producing a photo-acoustic conversion member by depositing, onto at least one surface of a substrate, a thin layer (10) made of a semiconductor material of the MM' type, wherein M is one element selected from the elements of the Zinc, (Zn), Aluminum (Al), Gallium (Ga), Cadmium (Cd), Indium (In) group and M' is one element selected from the elements of the Oxygen (O), Nitrogen (N), Sulphur (S), Phosphorus (P) group, with the material MM' having an energy of forbidden band ranging from 0.5eV to 8.0eV, with said thin layer having a crystallographic structure of the Wurtzite type, and comprising nanostructures which are columnar structures, the longitudinal axes of which are oriented perpendicularly to the thin layer growth plane, and
    - positioning a light source (20) adapted to emit of light beam (22) having a wavelength ranging from 155nm to $2.5\mu m$ relative to said photo-acoustic conversion member, so that, in operation, said source (20) emits a light beam towards the thin layer (10) of the photo-acoustic conversion member.

13. A manufacturing method according to claim 12, **characterized in that** said material MM' is $Zn_xO$, wherein x ranges from 0.5 to 0.7, preferably ranges from 0.5 to 0.6, and most preferably ranges from 0.5 to 0.55.

14. A manufacturing method according to claim 12, **characterized in that** the material MM' is $Al_xN$, wherein x ranges from 0.5 to 0.6.

15. A manufacturing method according to claim 12, **characterized in that** the material MM' is $Ga_xN$, wherein x ranges from 0.5 to 0.6.

16. A manufacturing method according to one of claims 12 to 15, **characterized in that** said wavelength ranges from 355nm to 415nm.

17. A manufacturing method according to one of claims 12 to 16, wherein the substrate (100) is made of glass or silicon.

18. A manufacturing method according to one of claims 12 to 17, wherein said substrate (100) is placed in a vacuum vessel, the residual pressure of which is less than $1x10^{-6}$ mbar.

19. A manufacturing method according to one of claims 12 to 18, wherein said thin layer (10) is deposited onto the substrate (100) by cathodic sputtering of a target consisting of a sintered substrate having a composition MM', the purity of which is at least 10ppm, with said substrate having a deposition surface intended to be sprayed using a (ionized) gas beam comprising at least argon (Ar) and the composition of the material M'.

20. Use of a photo-acoustic device (1) according to any one of claims 1 to 10, wherein:

    - said light source (20) is triggered and the amount of the light beam (22) emitted at a predetermined frequency is modulated;
    - said light beam (22) is oriented towards said thin layer of the photo-acoustic conversion member;
    - the sound wave (30) emitted by said thin layer (10) is detected.

*F i g . 1*

*F i g . 2*

*Fig.3*

HV: 10 kV [SE] WD: 6 mm - Couche PVD_01                    ⊢— 500 nm —⊣

*Fig. 4*

*Fig. 5*

**Fig.6**

**Fig.7**

## RÉFÉRENCES CITÉES DANS LA DESCRIPTION

**Documents brevets cités dans la description**

- US 20150131408 A
- US 20010055435 A1
- US 7762136 B2
- US 2006256339 A1

**Littérature non-brevet citée dans la description**

- **GUSEV V.E ; KARABUTOV A.A.** Laser Optoacoustics. American Institute of Physics, 1992
- **BEARD P.** *Biomedical photoacoustics imaging, Interface Focus,* 2011, vol. 1, 602-603
- **SÁ G.F ; SERPA C ; ARNAUT L.G.** *Journal of Controlled Release,* 2013, vol. 167 (3), 290-300
- **MIT O ZGRU et al.** ZnO Devices and Applications :Areview of Current status and Future Prospects. *Proceedings IEEE,* Juillet 2010, vol. 98, 1255-1268